# EUROPEAN PATENT SPECIFICATION

(11) **EP 4 314 799 B1**
(45) Date of publication and mention of the grant of the patent: **23.04.2025**
(21) Application number: 21729455.2
(22) Date of filing: 25.05.2021
(51) Int. Cl.: G01N 29/04, G01N 29/07, G01N 29/12, G01N 29/22, G01N 29/265

(54) **METHOD FOR NDT TESTING A SPECIMEN**
ZERSTÖRUNGSFREIE PRÜFUNG EINER PROBE
METHODE POUR TESTER UN SPECIMEN DE MANIERE NON DESTRUCTIVE

(43) Date of publication of application: 07.02.2024
(73) Proprietor: Proceq SA, 8603 Schwerzenbach (CH)
(72) Inventor: CIESLA, Tomasz, 8700 Küsnacht (CH); KÜPÇÜ, Cengiz Tugsav, 8134 Adliswil (CH); ASAGIKOZAN, Ramin, 8867 Niederurnen (CH); CABALLERO, Antonio, 8604 Volketswil (CH)
(74) Representative: E. Blum & Co. AG
(86) International application number: PCT/EP2021/063910
(87) International publication number: WO 2022/248026

(56) References cited:
- CN-U- 204 370 485
- RU-C1- 2 657 325
- US-A- 3 554 013
- US-A1- 2019 234 909
- PROCEQ: "2 in 1, Pundit Pile Integrity + Impact Echo PI8000", 23 May 2021 (2021-05-23), pages 1 - 2, XP055883868, Retrieved from the Internet <URL:PI8000 - Grupo KBhttps://www.grupokb.com.mx > file_id-1201> [retrieved on 20220126]
- SHEVALDYKIN V.G. ET AL: "Ultrasonic low-frequency transducers with dry dot contact and their applications for evaluation of concrete structures", 2002 IEEE ULTRASONICS SYMPOSIUM PROCEEDINGS. MUENCHEN, GERMANY, OCT. 8 - 11, 2002., 1 January 2002 (2002-01-01), US, pages 793 - 798, XP055899339, ISBN: 978-0-7803-7582-6, Retrieved from the Internet <URL:https://ieeexplore.ieee.org/stampPDF/getPDF.jsp?tp=&arnumber=1193518&ref=aHR0cHM6Ly9pZWVleHBsb3JlLmllZWUub3JnL2RvY3VtZW50LzExOTM1MTg=> [retrieved on 20220310], DOI: 10.1109/ULTSYM.2002.1193518

## Description

### Technical Field

The invention relates to a method for non-destructively testing a specimen by means of acoustic waves and a testing system.

### Background Art

US 2019/234909 A1 relates to a method and device for detecting and characterizing a reflecting element in an object.

In the field of non-destructive testing (NDT), acoustic waves are commonly used to probe man-made structures, such as slabs, pavements, walls, decks, piles or shafts, made from e.g. concrete, timber or metal. The structures may be categorized according to their geometry in plate-like structures, e.g. slabs, pavements, walls and decks, and pile-like structures, e.g. piles and shafts. Information retrieved about the structures includes a thickness of the (plate-like) structures, a length of the (pile-like) structures, and in general internal properties of the structures, e.g. flaws.

While the principle of testing a structure by acoustic waves may be applied to both, plate-like and pile-like structures, the devices used for measuring the acoustic waves and the methods for processing the measured data conventionally differ between the two categories of structures:
Impact-echo (IE) is an NDT method based on the use of impact-generated stress (acoustic) waves that propagate through plate-like structures and are reflected by internal flaws and external surfaces. Impact-echo can be used on thin concrete structures including slabs, pavements, walls, or decks, to assess their thickness or to locate flaws such as cracks, delamination, voids, honeycombing and debonding. Steel ball impactors are generally used to generate the acoustic waves. The ball diameter is generally selected according to the structure expected thickness. IE relies on measuring multiple wave reflections in a short period of time. As a consequence, IE probes must be able to measure high frequencies, e.g. above 10 kHz and in particular up to approximately 30 kHz. The structural health state is then determined based on analysing the measured acoustic waves in the frequency domain.

Pile integrity testing (PIT), also referred to as low-strain dynamic test or low-strain integrity test, is an NDT method used to assess the integrity of piles or shafts. This method is mostly applied in civil engineering for health assessment of, but not limited to, timber shaft and concrete pile such as used in deep foundation. Like impact echo, this method relies on impact-generated stress (acoustic) waves. The acoustic waves are generally generated with a hammer at the top of the pile next to the probe. The acquired signal shows the time of flight, i.e. the travel time, between the first impact and the waves reflected from the bottom of the pile or from any flaws in the pile. In PIT, the waves are travelling a longer distance than in IE, and only few reflections are generally captured. As a consequence, PIT probes are typically performant at low frequencies, e.g. between 100 Hz and 10 kHz. The structural health state is then determined based on analysing the time domain waveform.

The separation of and differing requirements of the two fields of IE and PIT have the consequence that the probes and processing algorithms used for one field is not suitable for the other, and vice versa. This leads to the drawback that an inspector intending to probe both, plate-like and pile-like structures, needs to have two kinds of equipment, i.e. probes and processing algorithms, available, which is both, impractical and expensive.

### Disclosure of the Invention

The problem to be solved by the present invention is therefore to provide an improved method and device for non-destructively testing a specimen by means of acoustic waves, in particular to widen a range of applicability of such method and device, in particular to different types and geometries of the specimen.

The different types and geometries of the specimen may be defined as follows:
"Plate-like" in particular means that two lateral dimensions of the specimen are significantly larger, e.g. at least a factor 2 or 3 larger, than a depth dimension of the specimen. Plate-like specimens are e.g. slabs, pavements, walls and decks. They may typically be made of concrete, reinforced concrete or rock.
"Pile-like" in particular means that the depth dimension of the specimen is significantly larger, e.g. a factor 2 or 3 larger, than the two lateral dimensions of the specimen. Pile-like specimens are e.g. piles and shafts. They may typically be made of concrete, metal, in particular iron or steel, or timber.

Both, plate-like and pile-like specimens may have an arbitrary shape in a horizontal plane, i.e. the plane spanned by the two horizontal dimensions. In particular, the shape in the horizontal plane may be round, rectangular or square. Further, the shape in the horizontal plane, in other words a cross-section in the horizontal plane, may be variable along the depth dimension.

In both cases, on the plate-like and the pile-like specimen, the measurement position, and in particular also an impact position for generating the acoustic waves, are located on a measurement side of the specimen, which in particular essentially coincides with a horizontal plane.

### Method for testing

According to a first aspect of the invention, this problem is solved by a method for non-destructively testing a specimen by means of acoustic waves. The method comprises the steps of
- receiving from a testing device at a measurement position, in mechanical contact with the specimen, a raw signal representing acoustic waves that propagated through the specimen: For generating the acoustic waves, the method may comprise a step of generating the acoustic waves at an impact position on the specimen, in particular by letting an impactor, such as a hand-held hammer or a steel ball, impact on the specimen. Such impact creates acoustic waves in a broad range of frequencies.

When the acoustic waves propagate through the specimen, they are attenuated, reflected and scattered. These effects may be frequency-dependent, i.e. they may effect different frequency components of the acoustic waves differently. For retrieving information about the specimen, e.g. a thickness of length of the specimen or material properties such as flaws or a speed of sound in the specimen, in particular reflected acoustic waves are processed. Such reflected waves may be reflected at one or several discontinuities in the specimen, e.g. flaws, layers or a boundary of the specimen. Accordingly, they are called single reflections and multiple reflections, respectively. Depending on the material, dimension and shape of the specimen, dominant frequency components of the reflected waves may be in a range between 100 Hz and 30 kHz. For a typical plate-like specimen, the dominant frequency component of the reflected waves may be between 5 and 30 kHz, whereas for a typical pile-like specimen, the dominant frequency components may be between 100 Hz and 6 kHz, in particular due to a longer travel path and thus more attenuation of higher frequency components.

The method further comprises the steps of
- providing options to process the raw data by at least a first and a second processing algorithm,
- processing the raw data by at least one of the first and the second processing algorithm,

wherein the first processing algorithm comprises deriving information about the specimen from multiple reflections of the acoustic waves,
wherein the second processing algorithm comprises deriving information about the specimen from a travel time of a single reflection of the acoustic waves.

The first processing algorithm may be suitable to retrieve information about a plate-like specimen. In particular, the first processing algorithm may be a algorithm used in Impact echo testing, e.g. a conventional IE algorithm.

The second processing algorithm may be suitable to retrieve information about a pile-like specimen. In particular, the second processing algorithm may be a algorithm used in Pile integrity testing, e.g. a conventional PIT algorithm. The two types of algorithms are detailed in the next section.

It is advantageous that the raw data received from the testing device, according to the method, may be processed by the first and/or the second processing algorithm. This means that the same testing device may be used for acquiring data both on a plate-like and a pile-like specimen. A requirement is that the device is sensitive for acoustic waves in the relevant frequency ranges as described above. An example device capable of acquiring suitable raw data is described below.

In an embodiment, the method is computer-implemented and provides the options to process the raw data to the user, e.g. by means of a GUI. The user may then be prompted to choose either the first or the second processing algorithm to process the raw data. Alternatively, the method may comprise a step of automatically selecting the first or second processing algorithm based on characteristic features of the raw data, e.g. a frequency range, a dominant frequency component or a travel time of a reflected wave in the data. In another embodiment, the method may comprise processing the raw data by both, the first and the second processing algorithm. This may e.g. include displaying data processed by both algorithms, e.g. in frequency domain as well as in time domain, to the user, e.g. by means of a GUI.

### Plate-like specimen

The first processing algorithm may be an algorithm adapted to process raw data acquired on a plate-like specimen, e.g. an IE algorithm. Thus, the first processing algorithm includes determining a frequency spectrum of the raw data, in particular by applying a Fourier transform to the raw data. Further, the first processing algorithm may include using frequency components of the raw data with frequencies up to at least 15 kHz, in particular up to at least 20 kHz. This is due to the plate-like shape of the specimen with a depth dimension, along which a reflected wave propagates transversally through the specimen, being of the order of 1 cm or 10 cm up to 1 m.

In an embodiment, the first processing algorithm includes determining a dominant frequency component in the frequency spectrum. The dominant frequency component may in particular be defined as a maximum frequency component, i.e. the Fourier component with the highest amplitude, e.g. in a defined frequency range, e.g. between 5 and 30 kHz. Alternatively, the dominant frequency component may be determined by finding a maximum of an envelope or windowed average of the frequency spectrum, e.g. in the defined frequency range.

Advantageously, the method further comprises the steps of receiving, from the testing device, raw data from several different measurement positions, and compiling a data set comprising the dominant frequency component per measurement position. Such data set may be visualized, in particular by displaying the data set as a heat map. This means that raw data with the testing device are acquired at different measurement position on the measurement side of the specimen, e.g. spaced apart from each other by 1 to 50 cm. Usually the impact position is shifted together with the measurement position. In general, the impact position is in a vicinity of the measurement position, e.g. having a distance between 1 and 50 cm, in particular between 10 and 20 cm, from the measurement position.

In order to retrieve information about the specimen from the raw data, the method may further comprise the steps of detecting a deviating dominant frequency component, which deviates from other dominant frequency components in the data set. "Deviating" may in particular be defined as differing from an average of the dominant frequency components, e.g. a mean or a median, by more than a threshold, e.g. a standard deviation or a certain percentile, e.g. the 10% or 90% percentile. In particular, the deviating dominant frequency component may then be attributed to a defect located at the corresponding measurement position, e.g. cracks, delamination, voids, honeycombing and debonding. Such detection of a deviating dominant frequency component may also be done manually by the user, e.g. by evaluating the data visualized as a heatmap over the measurement positions, as described above.

Alternatively, the first processing algorithm may comprise determining a thickness of the specimen, in particular based on the dominant frequency component. This is particularly useful if the specimen has a plate-like shape with the acoustic waves propagating transversally to the plate-like shape.

### Pile-like specimen

The second processing algorithm may be an algorithm adapted to process raw data acquired on a pile-like specimen, e.g. a PIT algorithm. Thus, the second processing algorithm may include evaluating the raw data in time domain. Further, the second processing algorithm may include using frequency components of the raw data with frequencies up to 10 kHz, in particular between 100 Hz and 10 kHz. This typically is the frequency range of single reflections of acoustic waves in pile-like structures, wherein the acoustic waves propagate along a longitudinal extension of the pile-like shape. In particular, the depth dimension, which is typically parallel to the longitudinal extension, of such pile-like specimen is of the order of 1 up to 50 m.

The second processing algorithm may include determining a length of the specimen based on the travel time of a single reflection of the acoustic waves. It is assumed that the specimen has a pile-like shape with the acoustic waves propagating along the longitudinal extension. The single reflection may then be effected at a bottom side of the specimen opposite to the measurement side or at a flaw within the specimen.

A requirement for determining the length or thickness of the specimen from travel time or frequency measurements is that the speed of sound in the specimen is known. Thus, the speed of sound may be input as a standard value for the material of the specimen. Alternatively, the method may comprise estimating the speed of sound from travel time measurements over a known distance, e.g. along the measurement side between impactor and measurement position, or from the impact position through a specimen of known length and back to the measurement position.

### Generating acoustic waves

As described before, the method may comprise generating the acoustic waves at an impact position on the specimen, in particular by letting an impactor im-pact on the specimen. The acoustic waves may e.g. be generated by manually hitting the specimen, in particular with an impact hammer. Such impact hammer may have dimensions of the order of 10 to 30 cm, and in particular a weight between 300 g and 3 kg.

Alternatively, generating the acoustic waves may include triggering an automatic impactor to hit the specimen. Such impactor may comprise a spring loaded test weight. When the impact position is located at a known distance from the measurement position, e.g. because the impactor is mounted to the test device, thereby defining a known distance between impact and measurement position, the method may further comprise determining the speed of sound in the specimen based on the known distance. **In** case, a direct arrival is evaluated, i.e. a surface wave propagating along the measurement surface, a correction factor needs to be applied to convert between surface wave speed and sound speed in the specimen.

**In** an embodiment, in particular when acquiring data on a pile-like structure, the method further comprises generating the acoustic waves at the impact position repetitively, thereby generating several raw signals, in particular several raw signals per measurement position. The several raw signals may then be averaged per measurement position, in particular before determining the travel time. This improves a signal-to-noise ratio of the data, such that arrival times of reflected waves, and hence the travel time, may be more precisely determined.

### Testing system

A second aspect of the invention relates to a testing system comprising
- a testing device comprising an acoustic wave sensor: An embodiment of such testing device is detailed below.
- means adapted to execute the steps of the method described above: Such means may include processing means, such as a CPU or an FPGA. Further, the means may be a personal computer, a laptop or a tablet computer in communication with the testing device. Advantageously, the means include a display configured to display a graphical representation of the raw data and/or processed data to a user.

In particular, the system may comprise first processing means adapted to execute the first processing algorithm and second processing means adapted to execute the second processing algorithm.

Further, the testing system may comprise an automatic impactor as described above. The automatic impactor advantageously is in communication with the processing means, e.g. with the tablet computer. In particular, the automatic impactor is configured to send a trigger signal to the processing means when the impactor impacts on the specimen. This may be used as a starting time for determining the travel time.

Also, the method described above may be implemented by a computer program. The computer program may then comprise instructions to cause the testing system to execute the steps of the method.

### Testing device

A third aspect (currently not claimed) relates to a testing device, in particular for the above testing system. All features described with respect to the system and the method are also meant to be applicable to the testing device, and vice versa.

The testing device comprises
- a housing, e.g. made of plastic. In particular, the housing is a protective enclosure and e.g. splash- and dust-proof. The housing may have an ergonomic shape to be gripped easily and reliably by a user and e.g. comprise grips.
- a contact element protruding from the housing and comprising a cavity: In particular, the contact element is adapted to be brought in mechanical contact with, e.g. pressed against, the specimen at the measurement position. The contact element advantageously has a plate-like shape. In particular, the contact element consists of one piece, in particular of metal, more particularly of stainless steel, which advantageously does not corrode in contact with concrete. In an embodiment, a part of the contact element protruding from the housing has a conical or rounded or flat shape. Each of these features contributes to a good mechanical coupling of the contact element to the specimen in order to measure acoustic waves in the specimen accurately, in particular with high sensitivity. In a different embodiment, the contact element may cover a bottom side of the device entirely, in this way "protruding" from the housing. Further, in particular for PIT measurements, additional couplant like putty or gel may be applied to the contact element or the specimen at the measurement position to further improve the coupling and increase sensitivity.
- an acoustic wave sensor mounted in the cavity: Advantageously, the acoustic wave sensor is mounted, in particular glued, to a wall of the cavity, in particular a wall that extends along an impact direction of the contact element. This enables a good coupling of the wave sensor to the contact element, and thus to the specimen, such that a high sensitivity, in particular over a large frequency range, e.g. between 1 and 30 kHz, in particular between 5 and 20 kHz, may be achieved. Also, this avoids spurious frequencies in this frequency range, e.g. coming from natural oscillations of the sensor or of the system of sensor and contact element.

The acoustic wave sensor may be any sensor suitable for measuring oscillations in the mentioned frequency range. Advantageously, the acoustic wave sensor is a piezo or MEMS accelerometer, in particular a capacitive MEMS accelerometer. Such MEMS accelerometer has a high sensitivity and covers the required frequency range. In particular, the raw data representing acoustic waves measured by the acoustic wave sensor may cover a frequency range from zero to at least 15 kHz, in particular to at least 20 kHz.

In an embodiment, the acoustic wave sensor is arranged on a flexible carrier or wires, in particular a flex print, in order to avoid a transmission of vibrations e.g. from the housing via the carrier to the sensor. Further, such carrier avoids that natural oscillations of the carrier are located in the required frequency range. In this respect, it is also advantageous that the flexible carrier extends along an impact direction of the contact element.

Further, the contact element may be mechanically decoupled from the housing via a damping element between the contact element and the housing. In particular, the damping element may attenuate an amplitude of oscillations of the housing by at least 50%, in particular at least 90%, before reaching the contact element. In an embodiment, the damping element may comprise at least one O-ring, e.g. made of rubber. In a further embodiment, the damping element may comprise damping glue.

Further, the contact element may comprise a protrusion held in a corresponding notch of the housing. In particular, the protrusion extends from a circumferential side of the contact element. This facilitates a mechanically decoupled, but still splash- and dust-tight mounting of the contact element in the housing. In such embodiment, the protrusion may be clamped in the notch by means of the damping element, in particular by at least one or two O-rings.

In an embodiment, a diameter of the contact element is between 10 and 50 mm, in particular between 20 and 30 mm. A height of the contact element may be between 5 and 15 mm. Such contact element does not have natural oscillations in the relevant frequency range, which otherwise would lead to spurious frequencies in the raw data.

Advantageously, the protruding part of the contact element protrudes from the housing by at least 2 mm. This ensures that only the contact element - and not the housing - is in contact with the specimen, even when the testing device is pressed against the specimen to ensure a good coupling.

The cavity advantageously has a slot-like shape, which in particular is adapted to a form factor of the acoustic wave sensor on the carrier. In particular, the cavity may have a width of 5 mm or less, in particular 3 mm or less, and a length of at least 10 mm. Further, the cavity may have a depth between 5 and 10 mm and/or have rounded edges. For an easy and fix mounting of the sensor in the cavity, the acoustic wave sensor may be mounted to the cavity by means of a glob-top. These dimensions and features, again, avoid spurious frequencies in the raw data acquired by the sensor, and make the device robust.

In an embodiment, the contact element is mounted to a first end of the housing, and the housing extends between the first and a second end. A part of the housing extending between the first and the second end may then have a diameter or width between 1 and 10 cm, in particular between 4 and 7 cm. A length of the part of the housing extending between the first and second end may be between 5 and 15 cm, in particular between 7 and 10 cm. Such housing has a small form factor, and is easily and safely gripped by one hand.

Advantageously, the device does not comprise an actuator or impactor. This avoids that vibrations generated by the actuator or impactor propagate inside the device, e.g. along the housing, and affect the measured data. However, the testing system may comprise an actuator or impactor in addition to the testing device. The actuator or impactor may be mounted in an impactor housing. In an embodiment, the impactor housing may then be mounted to the testing device, advantageously in a defined distance, and in particular with a damping element between impactor housing and the testing device's housing in order to avoid that vibrations from the impactor reach the sensor, which would be detrimental to the measured data.

In an advantageous embodiment, the testing device further comprises a communication module, in particular a Bluetooth transmitter or other wireless transmitter, configured to transmit raw data representing acoustic waves measured by the acoustic wave sensor. The raw data may then be received by processing means, such as a laptop or tablet computer, and processed according to the above method.

As is evident from the described features, such testing device has a wide range of applicability. In particular, such device may be used to acquire data for IE as well as for PIT. This allows the user to buy, bring and maintain only one device, while being able to test plate-like as well as pile-like structures.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows a perspective view of a testing device according to an embodiment of the invention;
Fig. 2 shows elements of the testing device of Fig. 1 in an open state;
Fig. 3 shows a cut through the testing device of Fig. 1;
Fig. 4 shows a part of the testing device of Fig. 1 in an open state;
Fig. 5 shows a detail of a cut through the testing device of Fig. 1;
Fig. 6 shows a testing device and system according to an embodiment of the invention;
Fig. 7 shows a flow diagram of a method for NDT testing according to an embodiment of the invention.

### Modes for Carrying Out the Invention

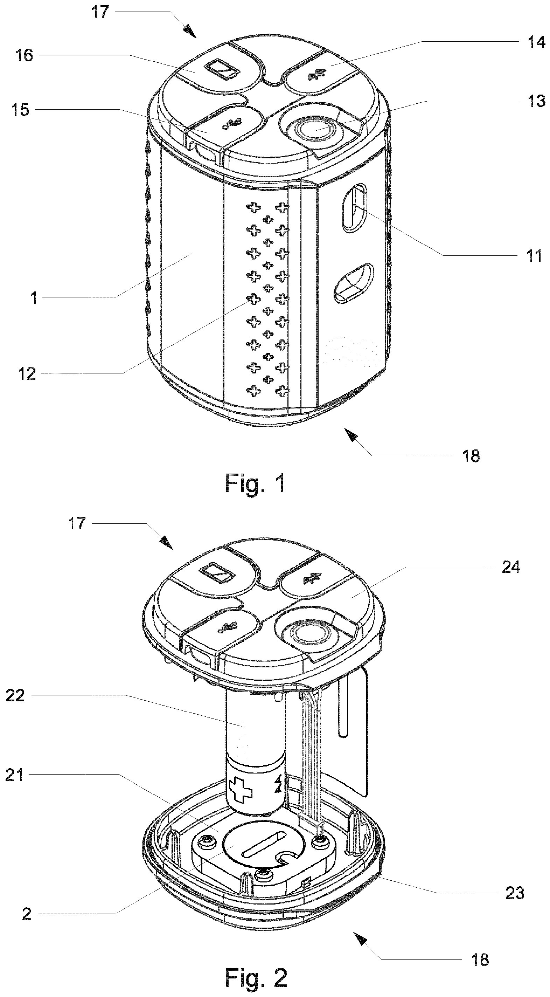

Fig. 1 shows a perspective view of an embodiment of the testing device. The device comprises a housing 1, e.g. made of plastic. For easy usability, in particular for a better grip, the housing 1 comprises knobs 12, e.g. in the form of Swiss crosses, which are advantageously made of plastic or rubber. Further, the housing 1 comprises a fixation 11, e.g. in form of a loop, for mounting a ribbon, which may be used to safely hold the device.

On a top side 17 of the housing, which is situated opposite to a bottom side 18 with the contact element (not shown in Fig. 1), various control and input/output elements are located. In general, the device may comprise a button 13 configured to switch on and off the device. The button 13 may further be configured to control the acoustic wave sensor (not shown in Fig. 1), in particular the button 13 may be configured to trigger the acoustic wave sensor to start a measurement. This is advantageous, compared to other ways of triggering the measurement, e.g. measuring during the whole time in which the device is switched on, since only relevant data are acquired, which simplifies a processing of the data. In particular, it avoids the necessity to define a time window, wherein the relevant data are situated, during processing.

In general, the device may comprise an indicator, e.g. an LED, configured to indicate an operation state of the device, such as "on" or "measuring". Such indicator may be included in the button 13. Advantageously, the button 13, facilitates a one-button control of the device as described before.

At the top side 17, the device further comprises a Bluetooth module 14 and a USB connector 15, both serving as communication modules, e.g. for transmitting measured raw data to a processing unit. The USB connector 15 may also be used to recharge a rechargeable battery forming a power supply of the device. Such rechargeable battery (see Fig. 2) may be replaced by opening the housing 1 via a knob 16.

The button 13, the Bluetooth module 14 and the USB connector 15 are arranged at the top side 17 of the housing in Fig. 1 for easy accessibility and usability of the device. However, each of these elements, in particular the button 13, may alternatively be arranged differently, e.g. on a side wall of the housing 1, located between top side 17 and bottom side 18.

Fig. 2 shows the testing device of Fig. 1 with a side wall of the housing 1 removed. In particular, only a bottom part 23 and a top part 24 of the housing 1 are shown. Thus, interior elements of the device are visible. The device comprises a contact element 2, which, in this embodiment, has a plate-like shape and has an essentially round cross-section in a horizontal plane. The contact element 2 is made of steel and configured to mechanically couple to the specimen for measuring acoustic waves.

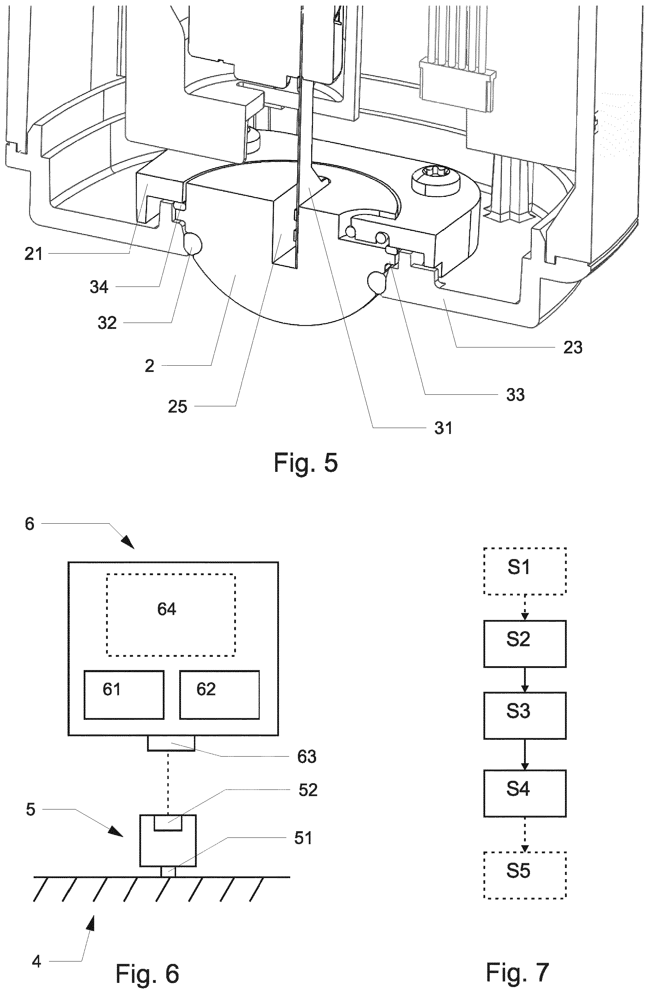

The contact element 2 is mounted to the housing 1, in particular to the bottom part 23, by means of a fixation element 21, which may be screwed to the housing. Advantageously, the contact element 2 is mounted to the housing via a damping element (see e.g. Fig. 5), such that it is mechanically decoupled from the housing as described above.

The device further comprises a battery 22, e.g. a rechargeable battery as mentioned before, as power supply.

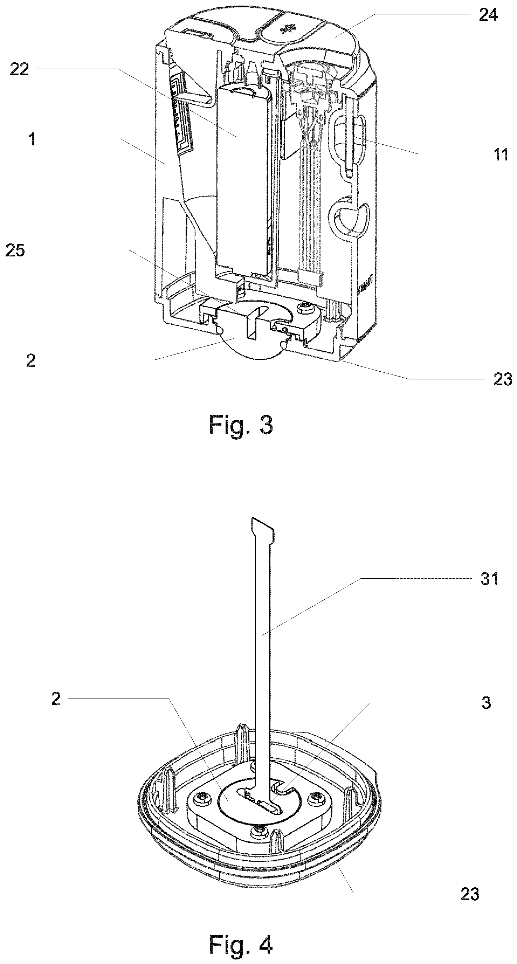

In Fig. 3, a cut through the device is shown with the same elements as described above. In particular, Fig. 3 shows how the fixation 11 is formed by a recess in the housing 1 and a small rod through the recess, thereby forming a loop for e.g. mounting a ribbon.

The contact element 2 comprises a protruding part, which protrudes from the housing 1 and in particular from the bottom part 23 of the housing, e.g. by at least 2 mm. The protruding part has a rounded shape, or alternatively may be conical. This ensures a good coupling of the contact element to the specimen.

Further, the contact element 2 comprises a cavity 25 in form of a slot for mounting the acoustic wave sensor (not shown in Fig. 3). A shape and dimensions of the cavity 25 are advantageously adapted to a shape and dimensions of the acoustic wave sensor. Typical dimensions are given above.

Fig. 4 shows the bottom part 23 of the housing with the contact element 2 and the acoustic wave sensor 3 mounted on a flexible carrier 31 in the slot of the contact element 2. The sensor 3 is a MEMS accelerometer, which has a high sensitivity and a wide frequency range as described before. Alternatively, the sensor 3 may be of a different type, e.g. a piezoelectric sensor, configured to sense acoustic waves in the relevant frequency range, e.g. for testing plate-like and pile-like specimens, as described before.

Advantageously, the sensor 3 is mounted entirely in the cavity 25. In other words, no part of the sensor 3 protrudes from the cavity 25. Further, the sensor 3 is fixedly glued into the cavity, in particular to at least one side wall of the cavity parallel to the impact direction of the contact element 2. This may in particular be achieved by a glob-top over the sensor 3 and the cavity 25. Such way of mounting the sensor 3 in the contact element 2 avoids that the sensor 3 may pick up spurious frequencies, i.e. signals not representing acoustic waves in the specimen, e.g. from oscillations of the sensor 3 itself or of the carrier 31.

The carrier 31 comprises leads to contact the acoustic wave sensor 3, and in particular connects the sensor 3 with the communication module and the battery. It is advantageous that the carrier 31 is flexible, e.g. a flex print, since this minimizes spurious oscillations, e.g. from the housing, propagated to the sensor 3 via the carrier.

Fig. 5 shows a cut through the lower part of the device of the previous figures. The contact element 2 is mounted to the bottom part 23 of the housing via the fixation element 21. For this purpose, the contact element 2 comprises a circumferential protrusion 33, which is clamped to the housing, in particular to the bottom part 23, by the fixation element 21. In general, the protrusion 33 may not extend around the entire circumference of the contact element 2, but only cover a part of the circumference. Alternatively, the contact element 2 may comprise several protrusions adapted to mount the contact element 2 to the housing.

In Fig. 5, an O-ring 32, e.g. made from rubber, is arranged between the contact element 2 and the housing, in particular the bottom part 23 of the housing. Such O-ring represents a damping element and is adapted to attenuate oscillations propagating through the damping element, in particular oscillations coming from the housing. In other words, the damping element mechanically decouples the contact element 2 from the housing, at least to a certain degree, e.g. at least 50% or 90%. Further, the O-ring 32 serves a sealing element for protecting the interior of the device, in particular making the housing splash- and dust-tight.

On an opposite side of the protrusion 33, another O-ring 34 is arranged, separating and mechanically decoupling the contact element 2 from the fixation element 21. The other O-ring 34, again, avoids spurious frequencies from external vibrations, e.g. from the housing, to be measured by the acoustic wave sensor. In general, the other O-ring 34 may not be necessary, i.e. one O-ring 32 may be sufficient as damping element, e.g. if the fixation element 21 itself exhibits damping properties.

In general, each of the above described features contributes to making the testing device sensitive to acoustic waves over a wide range of frequencies, e.g. between 0 and 35 kHz, in particular between 100 Hz and 20 kHz. Thus, such device may be used to probe plate-like specimens, e.g. with an IE method and algorithm, as well as pile-like specimens, e.g. with a PIT method and algorithm, as described above.

Fig. 6 shows a testing system according to an embodiment. The testing system comprises a testing device 5, e.g. as described above. In general, the testing device 5 comprises an acoustic wave sensor 51 configured to measure acoustic waves in mechanical contact with a specimen 4. As described above, the specimen 4 may have various shapes, e.g. plate-like or pile-like, and it may be of different materials, e.g. concrete, metal or timber. For acquiring data by means of the sensor 51, the device 5 is typically held against a surface of the specimen, e.g. by hand, in particular to establish a good coupling. In PIT, advantageously putty or gel is applied between the testing device 5, in particular its contact element, and the surface of the specimen, for a better coupling. For IE measurement, the contact element may in general be a dry-point contact, i.e. requiring no couplant such as putty or gel, which in particular needs to be pressed against the surface of the specimen.

The system further comprises a processing unit 6 configured to receive and process raw data from the device 5. Such processing unit may e.g. be a laptop or a tablet computer, which is convenient to use in the field or on a test site. Alternatively, the processing unit 6 may be comprised in the device 5. Advantageously, the device 5 comprises a communication module 52, e.g. a Bluetooth transmitter, configured to transmit the raw data to a communication module 63 of the processing unit 6. Alternatively, device 5 and processing unit 6 may be connected by a cable, or the processing unit 6 may be an integral part of the testing device 5, i.e. arranged in the same housing.

Advantageously, the processing unit 6 comprises first processing means 61 for carrying out a first processing algorithm, such as an IE algorithm, and second processing means 62 for carrying out a second processing algorithm, such as a PIT algorithm, as described above. The first and second processing means 61, 62 may be implemented e.g. as two separate or one common CPU or FPGA.

Further, the processing unit 6 may comprise a display 64 connected to the first and second processing means 61, 62 and configured to display a graphical representation of the raw data or processed data to the user. In particular, the processing unit 6 may be configured to carry out the method as described above and further detailed below with respect to Fig. 7.

Such testing system has the advantage that it may be used to probe specimens of different shapes and materials, in particular by applying different types of analysis to the raw data, e.g. in time domain as well as in frequency domain. Thus, the user only needs one testing system, i.e. one testing device plus processing unit, for performing NDT testing in the field or on a test site. This is more convenient than conventional solutions requiring at least two testing devices, and saves time and money.

Fig. 7 shows an embodiment of the method for NDT testing of a specimen, as it may be implemented by means of the above-described system. In preparation step S1, the system is set up. This may include switching the testing device on, establishing communication between the device and the processing unit and bringing the testing device in contact with the specimen at a measurement position.

In step S2, raw data representing acoustic waves that propagated through the specimen are received by the processing unit from the testing device. The acoustic waves typically include reflected waves, e.g. single or multiple reflections, which may be exploited to gain insight into the specimen, as described above. In particular, the acoustic waves are generated by an impactor, e.g. a manual hammer, impacting at an impact position near the measurement position, e.g. in a distance of 4 to 50 cm, in particular between 5 and 10 cm from the measurement position.

**In** step S3, the user may explicitly be provided with different options for processing the raw data, in particular with a first and second processing algorithm. **In** this case, the user may choose one of the processing algorithms, e.g. depending on a shape and/or material of the specimen. Alternatively, an applicable processing algorithm may be chosen automatically, e.g. based on features of the raw data, such as a frequency content or determined travel time. **In** a different embodiment, there may not be any choice of processing algorithm at all, e.g. because the raw data is processed by both, the first and second processing algorithm.

Step S4 comprises the actual processing of the raw data by at least one of the first and second processing algorithm.

**In** optional step S5, the processed data, and e.g. also the raw data, may be displayed to a user, e.g. via a GUI on a display of the processing unit. Advantageously, processing and displaying is done in real time, e.g. with a temporal delay to receiving the raw data of less than 10 s or even less than 1 s. Thus, the user may evaluate the acquired data directly in the field, and, if necessary, discard them and repeat the measurement. **In** particular, the method may comprise displaying the raw data and/or processed data in time domain as well as in frequency domain to the user, e.g. simultaneously.

Further, the method may include processing steps adjustable by the user, such as a filtering step or windowing step, in order to improve signal quality and receive better results, e.g. a more accurate estimate of the thickness or length of the specimen or more information about defects in the specimen.

## Claims

1. Method for non-destructively testing a specimen by means of acoustic waves, comprising the steps of
- (S2) receiving from a testing device (5) at a measurement position, in mechanical contact with the specimen (4), raw data representing acoustic waves that propagated through the specimen (4),
- (S3) providing options to process the raw data by at least a first and a second processing algorithm,
- (S4) processing the raw data by at least one of the first and the second processing algorithm,
wherein the first processing algorithm comprises deriving information about the specimen (4) from multiple reflections of the acoustic waves,
wherein the second processing algorithm comprises deriving information about the specimen (4) from a travel time of a single reflection of the acoustic waves,
**characterized in that** the first processing algorithm includes determining a frequency spectrum of the raw data.

2. The method of claim 1,
wherein determining the frequency spectrum of the raw data includes applying a Fourier transform to the raw data.

3. The method of any of the preceding claims,
wherein the first processing algorithm includes using frequency components of the raw data with frequencies up to at least 15 kHz, in particular up to at least 20 kHz.

4. The method of any of claims 2 to 3,
wherein the first processing algorithm includes determining a dominant frequency component in the frequency spectrum.

5. The method of claim 4, further comprising the steps of
- receiving, from the testing device (5), raw data from several different measurement positions, and
- compiling a data set comprising the dominant frequency component per measurement position,
- in particular displaying the data set as a heat map.

6. The method of claim 5, further comprising the step of
- detecting a deviating dominant frequency component, which deviates from other dominant frequency components in the data set,
- and in particular attributing the deviating dominant frequency component to a defect located at the corresponding measurement position.

7. The method of any of the preceding claims,
wherein the first processing algorithm comprises determining a thickness of the specimen (4), in particular based on the dominant frequency component,
in particular wherein the specimen (4) has a plate-like shape with the acoustic waves propagating transversally to the plate-like shape.

8. The method of any of the preceding claims,
wherein the second processing algorithm includes evaluating the raw data in time domain.

9. The method of any of the preceding claims,
wherein the second processing algorithm includes using frequency components of the raw data with frequencies up to 10 kHz and in particular above 100 Hz.

10. The method of any the preceding claims,
wherein the second processing algorithm includes determining a length of the specimen (4) based on the travel time,
in particular wherein the specimen (4) has a pile-like shape with the acoustic waves propagating along a longitudinal extension of the pile-like shape.

11. The method of any of the preceding claims, further comprising
- generating the acoustic waves at an impact position on the specimen (4), in particular by letting an impactor impact on the specimen.

12. The method of claim 11,
wherein generating the acoustic waves includes manually hitting the specimen (4), in particular with an impact hammer.

13. The method of claim 11,
wherein generating the acoustic waves includes triggering an automatic impactor to hit the specimen (4),
in particular wherein the impact position is located at a known distance from the measurement position, and
in particular wherein the method further comprises
- determining a speed of sound in the specimen (4) based on the known distance.

14. The method of any of claims 11 to 13, further comprising
- generating the acoustic waves at the impact position repetitively, thereby generating several raw signals,
- averaging over the several raw signals at one measurement position, in particular before determining the travel time.

15. A testing system comprising
- a testing device (5) comprising an acoustic wave sensor (3, 51),
- means (6) adapted to execute the steps of the method of any of the preceding claims,
- in particular first processing means (61) adapted to execute the first processing algorithm and second processing means (62) adapted to execute the second processing algorithm.

16. Computer program comprising instructions to cause the testing system of claim 15 to execute steps of the method of any of claims 1 to 14.

## Patentansprüche

1. Verfahren zur zerstörungsfreien Prüfung einer Probe mittels akustischer Wellen, umfassend die folgenden Schritte
- (S2) Empfangen von Rohdaten, die akustische Wellen darstellen, die sich durch die Probe (4) ausgebreitet haben, von einem Prüfgerät (5) an einer Messposition, die in mechanischem Kontakt mit der Probe (4) steht,
- (S3) Bereitstellen von Optionen zur Verarbeitung der Rohdaten durch mindestens einen ersten und einen zweiten Verarbeitungsalgorithmus,
- (S4) Verarbeiten der Rohdaten durch mindestens einen des ersten und zweiten Verarbeitungsalgorithmus,
wobei der erste Verarbeitungsalgorithmus das Ableiten von Informationen über die Probe (4) aus Mehrfachreflexionen der akustischen Wellen umfasst,
wobei der zweite Verarbeitungsalgorithmus das Ableiten von Informationen über die Probe (4) aus einer Laufzeit einer einzelnen Reflexion der akustischen Wellen umfasst,
**dadurch gekennzeichnet, dass** der erste Verarbeitungsalgorithmus die Bestimmung eines Frequenzspektrums der Rohdaten umfasst.

2. Das Verfahren nach Anspruch 1,
wobei die Bestimmung des Frequenzspektrums der Rohdaten die Anwendung einer Fourier-Transformation auf die Rohdaten beinhaltet.

3. Das Verfahren nach einem der vorhergehenden Ansprüche,
wobei der erste Verarbeitungsalgorithmus die Verwendung von Frequenzkomponenten der Rohdaten mit Frequenzen bis zu mindestens 15 kHz, insbesondere bis zu mindestens 20 kHz, umfasst.

4. Das Verfahren nach einem der Ansprüche 2 bis 3,
wobei der erste Verarbeitungsalgorithmus die Bestimmung einer dominanten Frequenzkomponente im Frequenzspektrum umfasst.

5. Das Verfahren nach Anspruch 4, ferner umfassend die folgenden Schritte
- Empfangen von Rohdaten von mehreren verschiedenen Messpositionen von der Prüfeinrichtung (5) und
- Zusammenstellen eines Datensatzes, der die dominante Frequenzkomponente pro Messposition enthält,
- insbesondere Darstellen des Datensatzes als Heatmap.

6. Das Verfahren nach Anspruch 5, umfassend ferner den Schritt
- Erkennen einer abweichenden dominanten Frequenzkomponente, die von anderen dominanten Frequenzkomponenten im Datensatz abweicht,
- und insbesondere Zuordnen der abweichenden dominanten Frequenzkomponente zu einem an der entsprechenden Messposition befindlichen Defekt.

7. Das Verfahren nach einem der vorhergehenden Ansprüche,
wobei der erste Verarbeitungsalgorithmus die Bestimmung einer Dicke der Probe (4) umfasst, insbesondere auf der Grundlage der dominanten Frequenzkomponente,
insbesondere wobei die Probe (4) eine plattenartige Form hat und die akustischen Wellen sich quer zur plattenartigen Form ausbreiten.

8. Das Verfahren nach einem der vorhergehenden Ansprüche,
wobei der zweite Verarbeitungsalgorithmus die Auswertung der Rohdaten im Zeitbereich umfasst.

9. Das Verfahren nach einem der vorhergehenden Ansprüche,
wobei der zweite Verarbeitungsalgorithmus die Verwendung von Frequenzkomponenten der Rohdaten mit Frequenzen bis zu 10 kHz und insbesondere über 100 Hz umfasst.

10. Das Verfahren nach einem der vorhergehenden Ansprüche,
wobei der zweite Verarbeitungsalgorithmus die Bestimmung einer Länge der Probe (4) auf der Grundlage der Laufzeit umfasst,
insbesondere wobei die Probe (4) eine pfahlartige Form hat und sich die akustischen Wellen entlang einer Längserstreckung der pfahlartigen Form ausbreiten.

11. Das Verfahren nach einem der vorhergehenden Ansprüche, umfassend ferner
- Erzeugen der akustischen Wellen an einer Aufschlagposition auf der Probe (4), insbesondere durch Aufschlagen eines Impaktors auf die Probe.

12. Das Verfahren nach Anspruch 11,
wobei das Erzeugen der akustischen Wellen das manuelle Schlagen auf die Probe (4), insbesondere mit einem Schlaghammer, umfasst.

13. Das Verfahren nach Anspruch 11,
wobei das Erzeugen der akustischen Wellen das Auslösen eines automatischen Impaktors zum Auftreffen auf die Probe (4) umfasst,
insbesondere wobei sich die Aufschlagposition in einem bekannten Abstand von der Messposition befindet, und
insbesondere wobei das Verfahren umfasst
- Bestimmen einer Schallgeschwindigkeit in der Probe (4) auf Grundlage des bekannten Abstands.

14. Das Verfahren nach einem der Ansprüche 11 bis 13, ferner umfassend
- wiederholtes Erzeugen der akustischen Wellen an der Aufschlagposition, dadurch Erzeugen mehrerer Rohsignale,
- Mittelwertbildung über mehrere Rohsignale an einer Messposition, insbesondere vor der Bestimmung der Laufzeit.

15. Ein Prüfsystem umfassend
- ein Prüfgerät (5) mit einem Sensor (3, 51) für akustische Wellen,
- Mittel (6), die eingerichtet sind, die Schritte des Verfahrens nach einem der vorhergehenden Ansprüche auszuführen,
- insbesondere erste Verarbeitungsmittel (61), die zur Ausführung des ersten Verarbeitungsalgorithmus eingerichtet sind, und zweite Verarbeitungsmittel (62), die zur Ausführung des zweiten Verarbeitungsalgorithmus eingerichtet sind.

16. Computerprogramm umfassend Anweisungen, die das Prüfsystem nach Anspruch 15 veranlassen, die Schritte des Verfahrens nach einem der Ansprüche 1 bis 14 auszuführen.

## Revendications

1. Procédé pour tester de manière non destructive un spécimen au moyen d'ondes acoustiques, comprenant les étapes consistant à
- (S2) recevoir d'un dispositif de test (5) à une position de mesure, en contact mécanique avec le spécimen (4), des données brutes représentant des ondes acoustiques qui se sont propagées à travers le spécimen (4),
- (S3) fournir des options pour traiter les données brutes par au moins un premier et un deuxième algorithme de traitement,
- (S4) traiter les données brutes par au moins l'un des premier et deuxième algorithmes de traitement,
dans lequel le premier algorithme de traitement comprend la dérivation d'informations sur l'échantillon (4) à partir de réflexions multiples des ondes acoustiques,
dans lequel le deuxième algorithme de traitement comprend la dérivation d'informations sur l'échantillon (4) à partir d'un temps de parcours d'une réflexion unique des ondes acoustiques,
**caractérisé en ce que** le premier algorithme de traitement comprend la détermination d'un spectre de fréquences des données brutes.

2. Le procédé selon la revendication 1,
dans lequel la détermination du spectre de fréquences des données brutes comprend l'application d'une transformée de Fourier aux données brutes.

3. Le procédé selon l'une des revendications précédentes,
dans lequel le premier algorithme de traitement comprend l'utilisation de composantes de fréquence des données brutes avec des fréquences allant jusqu'à au moins 15 kHz, en particulier jusqu'à au moins 20 kHz.

4. Le procédé selon l'une des revendications 2 à 3,
dans lequel le premier algorithme de traitement comprend la détermination d'une composante de fréquence dominante dans le spectre de fréquences.

5. Le procédé selon la revendication 4, comprenant en outre les étapes consistant à
- recevoir du dispositif de test (5), des données brutes provenant de plusieurs positions de mesure différentes, et
- compiler un ensemble de données comprenant la composante de fréquence dominante par position de mesure,
- en particulier afficher l'ensemble de données sous forme de carte thermique.

6. Le procédé selon la revendication 5, comprenant en outre l'étape consistant à
détecter une composante de fréquence dominante déviante, qui s'écarte des autres composantes de fréquence dominante dans l'ensemble de données,
et en particulier attribuer la composante de fréquence dominante déviante à un défaut situé à la position de mesure correspondante.

7. Le procédé selon l'une des revendications précédentes,
dans lequel le premier algorithme de traitement comprend la détermination d'une épaisseur de l'échantillon (4), en particulier sur la base de la composante de fréquence dominante,
en particulier dans lequel l'échantillon (4) a une forme de plaque avec les ondes acoustiques se propageant transversalement à la forme de plaque.

8. Le procédé selon l'une des revendications précédentes,
dans lequel le deuxième algorithme de traitement comprend l'évaluation des données brutes dans le domaine temporel.

9. Le procédé selon l'une des revendications précédentes,
dans lequel le deuxième algorithme de traitement comprend l'utilisation de composantes de fréquence des données brutes avec des fréquences allant jusqu'à 10 kHz et en particulier supérieures à 100 Hz.

10. Le procédé selon l'une des revendications précédentes,
dans lequel le deuxième algorithme de traitement comprend la détermination d'une longueur de l'échantillon (4) en fonction du temps de parcours,
en particulier dans lequel l'échantillon (4) a une forme de poil avec les ondes acoustiques se propageant le long d'une extension longitudinale de la forme de poil.

11. Le procédé selon l'une des revendications précédentes, comprenant en outre
- générer des ondes acoustiques à une position d'impact sur l'échantillon (4), en particulier en laissant un impacteur heurter l'échantillon.

12. Le procédé selon la revendication 11,
dans lequel la génération des ondes acoustiques comprend le fait de frapper manuellement l'échantillon (4), en particulier avec un marteau à percussion.

13. Le procédé selon la revendication 11,
dans lequel la génération des ondes acoustiques comprend le fait de déclencher un impacteur automatique pour frapper l'échantillon (4),
en particulier dans lequel la position d'impact est située à une distance connue de la position de mesure, et
en particulier dans lequel le procédé comprend en outre
- déterminer une vitesse du son dans l'échantillon (4) sur la base de la distance connue.

14. Le procédé selon l'une des revendications 11 à 13, comprenant en outre
- générer répétitivement des ondes acoustiques au niveau de la position d'impact, générant ainsi plusieurs signaux bruts,
- calculer la moyenne des différents signaux bruts au niveau d'une position de mesure, en particulier avant de déterminer le temps de parcours.

15. Un système de test comprenant
- un dispositif de test (5) comprenant un capteur d'ondes acoustiques (3, 51),
- des moyens (6) adaptés pour exécuter les étapes du procédé selon l'une des revendications précédentes,
- en particulier des premiers moyens de traitement (61) adaptés pour exécuter le premier algorithme de traitement et des deuxièmes moyens de traitement (62) adaptés pour exécuter le deuxième algorithme de traitement.

16. Programme informatique comprenant des instructions pour faire exécuter par le système de test selon la revendication 15 les étapes du procédé selon l'une des revendications 1 à 14.
